# EUROPEAN PATENT APPLICATION

(11) **EP 2 662 246 A1**
(43) Date of publication of application: **13.11.2013**
(21) Application number: 12732078.6
(22) Date of filing: 04.01.2012
(51) Int. Cl.: B60R 21/264

(54) **GAS GENERATOR**

(30) Priority: 07.01.2011 JP 2011001940
(71) Applicant: Nippon Kayaku Kabushiki Kaisha, Tokyo 102-8172 (JP)
(72) Inventor: OHSUGI, Satoshi, Himeji-shi Hyogo 679-2123 (JP); MUKUNOKI, Hirotaka, Himeji-shi Hyogo 679-2123 (JP); TANAKA, Yusuke, Himeji-shi Hyogo 679-2123 (JP)
(74) Representative: TBK
(86) International application number: PCT/JP2012/050028
(87) International publication number: WO 2012/093673

(57) **Abstract**

A gas generator (1A) includes a housing including a lower shell (10) and an upper shell (20), an igniter (30), a gas generating agent (41), and a filter (50). The housing has a circumferential wall portion (12, 22) in a short, substantially cylindrical shape provided with a gas discharge opening (24) as well as a bottom plate portion (11) and a top plate portion (21) substantially in a disc shape closing axial end portions of the circumferential wall portion (12, 22). The filter (50) is formed from a stack structure made of a hollow, substantially cylindrical member and formed by winding hook metal. The housing further has, in a portion between the circumferential wall portion (22) and the top plate portion (21), an upper curved corner portion (23) which continues to each of these adjacent circumferential wall portion (22) and top plate portion (21) and is formed by abutment of an axial end portion of the filter (50) along a circumferential direction.

## Description

### TECHNICAL FIELD

The present invention relates to a gas generator incorporated in a passenger protection apparatus, and more particularly to what is called a disc type gas generator incorporated in an air bag apparatus equipped in a steering wheel or the like of a car.

### BACKGROUND ART

From a point of view of protection of a driver and/or a passenger in a car or the like, an air bag apparatus which is a passenger protection apparatus has conventionally widely been used. The air bag apparatus is equipped for the purpose of protecting a driver and/or a passenger against shock caused at the time of collision of a vehicle or the like, and it receives a body of a driver or a passenger with an air bag serving as a cushion, as the air bag is expanded and developed instantaneously at the time of collision of the vehicle or the like. The gas generator is equipment which is incorporated in this air bag apparatus, an igniter therein being ignited in response to power feed through a control unit at the time of collision of a vehicle or the like to thereby bum a gas generating agent with flame caused by the igniter and instantaneously generate a large amount of gas, and thus expands and develops an air bag. It is noted that the air bag apparatus is equipped, for example, in a steering wheel, an instrument panel, or the like of a car.

Gas generators of various structures are available, and in particular, what is called a disc type gas generator is available as a gas generator suitably made use of for a driver-seat-side air bag apparatus equipped in a steering wheel or the like. In general, the disc type gas generator has a short cylindrical housing of which axial end portions are closed, a gas discharge opening being provided in a circumferential wall of the housing, and the housing accommodating a gas generating agent, an igniter, a filter, and the like.

Among these components, the filter functions as removal means for removing by catching slag (residues) contained in the gas generated in a combustion chamber, which is arranged to radially surround the combustion chamber accommodating a gas generating agent, and also functions as cooling means for lowering a temperature of the gas as the gas passes therethrough.

Filters of various constructions are available as filters, and a filter formed by annularly winding a metal wire rod or a metal mesh member, a filter formed by annularly packing a metal wire rod or a metal mesh member by press-working, and the like are known as representative filters. The filter formed by thus annularly winding a metal wire rod or a metal mesh member or annularly packing a metal wire rod or a metal mesh member by press-working, however, suffers a problem of heavier weight or complicated manufacturing thereof.

Therefore, from a point of view of lighter weight or facilitation of manufacturing, use of a filter formed by winding a plate-shaped metal member called hook metal as the filter has been proposed (see, for example, Japanese Patent Laying-Open No. 2009-286264 (PTD 1), Japanese Patent Laying-Open No. 2010-234843 (PTD 2), and the like). Here, the hook metal refers to a plate-shaped member made of metal, which has a plurality of openings each having a protrusion formed around its periphery.

In the filter formed by winding this hook metal, the above-described protrusions are located between a plurality of plate-shaped portions stacked in a radial direction, and presence of these protrusions leads to formation of layered gap portions inside. Then, a labyrinthine flow path is formed in the filter by the layered gap portions and the above-described openings so that a gas flows through this flow path and a cooling function and a slag catch function described above are effectively exhibited.

In addition, it has been known that, in a case where no measures are taken in a disc type gas generator, a gas generated in a combustion chamber partly flows out through a gap between the filter and the housing during actuation and the gas may discharge through a gas discharge opening without passing through the filter. If such effluence of the gas through the gap occurs, not only desired output characteristics cannot be obtained but also such a problem that the gas is not sufficiently cooled or a large amount of slag is contained in the gas discharged from the gas generator arise.

In order to prevent the gas from flowing out through the gap described above, generally in the disc type gas generator, such a construction that an effluence prevention member made of metal is arranged to extend along an inner circumferential surface of the filter defining the combustion chamber and along an inner surface of the housing and the effluence prevention member is brought in contact with each of the inner circumferential surface of the filter and the inner surface of the housing has been adopted (see, for example, Japanese Patent Laying-Open No. 10-287197 (PTD 3)).

### CITATION LIST

### PATENT DOCUMENT

PTD 1: Japanese Patent Laying-Open No. 2009-286264
PTD 2: Japanese Patent Laying-Open No. 2010-234843
PTD 3: Japanese Patent Laying-Open No. 10-287197

### SUMMARY OF INVENTION

### TECHNICAL PROBLEM

In the gas generators disclosed in Japanese Patent Laying-Open No. 2009-286264 and Japanese Patent Laying-Open No. 2010-234843 described above, from a point of view of stable fixation to the housing, the filter is assembled to the housing by being fixed by sandwiching in an axial direction between a disc portion and a bottom plate portion in a flat plate shape of the housing. These top plate portion and bottom plate portion of the housing, however, are sites where deformation is likely with increase in internal pressure in the combustion chamber, and hence creation of a gap between the filter and the housing during actuation is concerned.

Here, in the gas generator disclosed in these documents, by forming axial end portions of the filter from a folded portion or a bent portion, elastic biasing force is provided to the axial end portions. Consideration is thus given such that a state of abutment to the top plate portion and the bottom plate portion of the filter is maintained based on the elastic biasing force so as not to create the gap above even in the case where the top plate portion and the bottom plate portion of the housing deform.

In the case where deformation of the top plate portion and the bottom plate portion is great, however, it becomes difficult to maintain the state of abutment above. Therefore, depending on specifications, a case where arrangement of an effluence prevention member described above is more preferred is also assumed. Thus, in the case where an effluence prevention member is arranged, a problem of complicated build-up operations with increase in the number of parts or a problem of failure to achieve sufficient weight reduction remains, and there can still be room for improvement in this regard.

Therefore, the present invention was made to solve the problems described above, and an object thereof is to provide a gas generator with a simplified construction, capable of more reliably preventing a gas from flowing out through a gap between a filter and a housing.

### SOLUTION TO PROBLEM

A gas generator based on the present invention includes a housing, an igniter, and a filter. The housing has a circumferential wall portion in a short, substantially cylindrical shape provided with a gas discharge opening and a pair of end wall portions substantially in a disc shape closing axial end portions of the circumferential wall portion and containing a combustion chamber accommodating a gas generating agent. The igniter is attached to one of the pair of end wall portions so as to face the combustion chamber. The filter is formed from a member in a hollow, substantially cylindrical shape disposed in the housing. The filter includes a plate-shaped portion made of metal, which extends along a circumferential direction so as to surround the combustion chamber in a radial direction of the housing and is provided with a plurality of openings, and it is fixed to the housing by being sandwiched by the housing in an axial direction. The housing further has a curved corner portion which continues to each of adjacent circumferential wall portion and end wall portion and is formed by abutment of axial end portions of the plate-shaped portion of the filter along a circumferential direction, in at least one of portions between the circumferential wall portion and the pair of end wall portions.

In the gas generator based on the present invention above, preferably, the curved corner portion to which the axial end portion of the plate-shaped portion of the filter abuts is at least located between an end wall portion which is different from the end wall portion to which the igniter is attached and the circumferential wall portion.

In the gas generator based on the present invention above, preferably, the axial end portion of the plate-shaped portion of the filter, which abuts to the curved corner portion, is formed from a folded portion formed by folding the plate-shaped portion or a bent portion formed by bending the plate-shaped portion.

In the gas generator based on the present invention above, preferably, the plate-shaped portion has a protrusion around a periphery of the opening, and preferably, the filter is formed from a stack structure which is formed such that the plate-shaped portion having the protrusion is stacked in a radial direction to thereby form layered gap portions therein.

In the gas generator based on the present invention above, preferably, the axial end portion of the plate-shaped portion of the filter, which abuts to the curved corner portion, is formed from an axial end portion of the plate-shaped portion located at least in an outermost layer of the stacked plate-shaped portions.

In the gas generator based on the present invention above, preferably, the axial end portion of the plate-shaped portion of the filter, which abuts to the curved corner portion, is formed from an axial end portion of the plate-shaped portion located at least in an innermost layer of the stacked plate-shaped portions.

In the gas generator based on the present invention above, preferably, the filter is formed from a stack structure formed by winding one plate-shaped member made of metal.

### ADVANTAGEOUS EFFECTS OF INVENTION

According to the present invention, a gas generator with a simplified construction, capable of reliably preventing a gas from flowing out through a gap between a filter and a housing can be obtained.

### BRIEF DESCRIPTION OF DRAWINGS

Fig. 1 is a schematic diagram of a gas generator in a first embodiment of the present invention.
Fig. 2 is a schematic perspective view of a filter shown in Fig. 1.
Fig. 3 is an enlarged perspective view of a surface portion of a plate-shaped portion of the filter shown in Fig. 1.
Fig. 4 is an enlarged view of an area in the vicinity of an upper curved corner portion of the gas generator shown in Fig. 1.
Fig. 5 is an enlarged view of an area in the vicinity of a lower curved corner portion of the gas generator shown in Fig. 1.
Fig. 6 is an enlarged view of the area in the vicinity of the upper curved corner portion during actuation of the gas generator shown in Fig. 1.
Fig. 7 is an enlarged view of the area in the vicinity of the lower curved corner portion during actuation of the gas generator shown in Fig. 1.
Fig. 8 is an enlarged view of an area in the vicinity of the upper curved corner portion of the gas generator according to a first variation.
Fig. 9 is an enlarged view of an area in the vicinity of the upper curved corner portion of the gas generator according to a second variation.
Fig. 10 is a schematic diagram of a gas generator in a second embodiment of the present invention.
Fig. 11 is a schematic diagram of a gas generator in a third embodiment of the present invention.

### DESCRIPTION OF EMBODIMENTS

An embodiment of the present invention will be described hereinafter in detail with reference to the drawings. An embodiment and a variation thereof shown below represent application of the present invention to a disc type gas generator incorporated in an air bag apparatus equipped in a steering wheel or the like of a car. It is noted that the same or common elements in the embodiment and the variation thereof shown below have the same reference characters allotted in the drawings and description thereof will not be repeated.

### (First Embodiment)

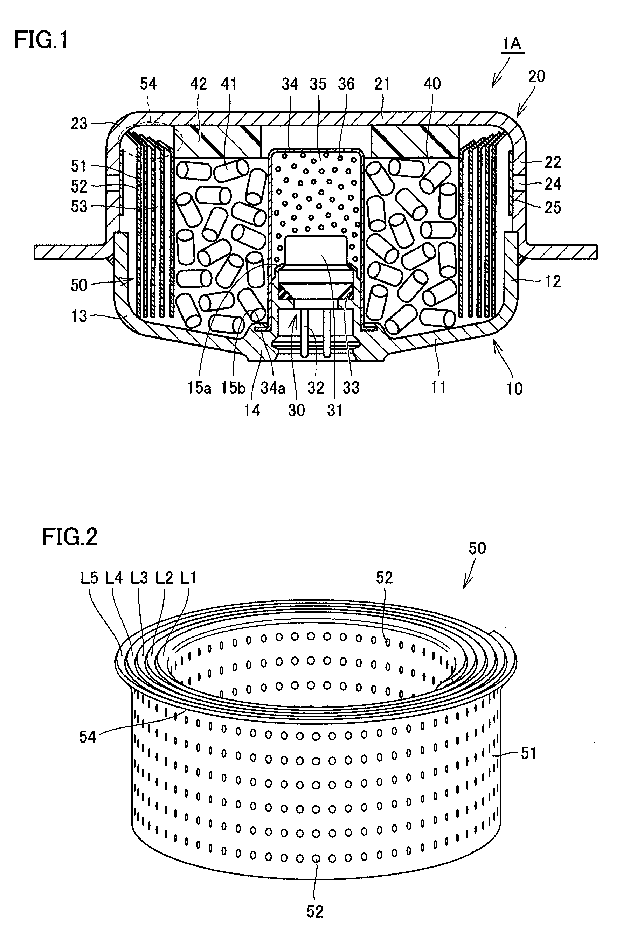

Fig. 1 is a schematic diagram of a gas generator in a first embodiment of the present invention. An overall structure of a gas generator 1A in the present embodiment will initially be described with reference to this Fig. 1.

As shown in Fig. 1, gas generator 1A in the present embodiment has a housing of which outer shape is in a short, substantially columnar shape and which has opposing axial ends closed and accommodates various components therein. The housing has a circumferential wall portion in a short, substantially cylindrical shape and a pair of end wall portions substantially in a disc shape closing axial end portions of this circumferential wall portion. These circumferential wall portion and pair of end wall portions are formed by combining a lower shell 10 and an upper shell 20 formed in a substantially cylindrical shape with bottom such that opening surfaces thereof face each other.

More specifically, lower shell 10 has a circumferential wall portion 12, a bottom plate portion 11 corresponding to one of the pair of end wall portions, and a lower curved corner portion 13 located therebetween and continuing to each of circumferential wall portion 12 and bottom plate portion 11, and upper shell 20 has a circumferential wall portion 22, a top plate portion 21 corresponding to the other of the pair of end wall portions, and an upper curved corner portion 23 located therebetween and continuing to each of circumferential wall portion 22 and bottom plate portion 21.

Lower shell 10 and upper shell 20 are each formed from a member made of metal such as stainless steel, iron steel, an aluminum alloy, and a stainless alloy. Lower shell 10 and upper shell 20 are formed from a metal member in a shape of a plate or a piece of block with the use of a mold or the like, through forging, drawing, press-working, or the like, or combination thereof. In addition, electron-beam welding, laser welding, friction welding, or the like is suitably made use of for joining lower shell 10 and upper shell 20 to each other.

A holding portion 14 is formed in a substantially central portion of bottom plate portion 11 of lower shell 10. This holding portion 14 is a site for holding an igniter 30. Specifically, igniter 30 is attached from an inner side of lower shell 10 to holding portion 14 such that a terminal pin 32 of igniter 30 is inserted through an opening provided in holding portion 14, and a crimping portion 15a provided at a tip end of holding portion 14 is crimped toward igniter 30 in this state, so that igniter 30 is fixed by crimping to holding portion 14 of lower shell 10. It is noted that a connector (not shown) of a harness for connecting igniter 30 and a control unit to each other is connected to terminal pin 32 arranged to be exposed to the outside of the housing.

Igniter 30 is an ignition device for producing flame and includes an ignition portion 31 and terminal pin 32 described above. Ignition portion 31 has a squib cup made of metal or plastic, and contains an ignition agent ignited at the time of actuation and a resistor (bridge wire) for burning this ignition agent. Terminal pin 32 is connected to the resistor for igniting the ignition agent. A Nichrome wire or the like is generally made use of as a resistor, and ZPP (zirconium potassium perchlorate), ZWPP (zirconium tungsten potassium perchlorate), lead tricinate, or the like is generally made use of as the ignition agent.

Upon sensing collision, a prescribed amount of current flows in a resistor through terminal pin 32. As the prescribed amount of current flows in the resistor, Joule heat is generated in the resistor and the ignition agent starts burning. Flame at a high temperature caused by burning causes a squib cup storing the ignition agent to burst. A time period from flow of a current in the resistor until actuation of igniter 30 is generally not longer than 2 milliseconds in the case where a Nichrome wire is made use of for the resistor.

A sealing member 33 is interposed between igniter 30 and holding portion 14. Sealing member 33 serves to hermetically seal an enhancer chamber 35 which will be described later by air-tightly sealing a gap created between igniter 30 and holding portion 14, and it is inserted in the gap in fixing by crimping igniter 30 to holding portion 14. A sealing member made of a material having sufficient heat resistance and durability is preferably made use of as sealing member 33, and for example, an O ring or the like made of an EPDM resin representing one type of ethylene propylene rubber is suitably made use of.

It is noted that hermeticity of enhancer chamber 35 can further be enhanced by separately applying a liquid sealing agent to a portion where sealing member 33 is to be interposed. Here, a liquid sealing agent containing a resin material excellent in heat resistance, durability, corrosion resistance, and the like after curing is suitably selected and made use of as the liquid sealing agent, and for example, a cyanoacrylate-based resin or a silicone-based resin is particularly suitably made use of as the resin material. In addition, for the resin material, other than the resin materials described above, a phenol-based resin, an epoxy-based resin, a melamine-based resin, a urea-based resin, a polyester-based resin, an alkyd-based resin, a polyurethane-based resin, a polyimide-based resin, a polyethylene-based resin, a polypropylene-based resin, a polyvinyl chloride-based resin, a polystyrene-based resin, a polyvinyl acetate-based resin, a polytetrafluoroethylene-based resin, an acrylonitrile butadiene styrene-based resin, an acrylonitrile styrene-based resin, an acryl-based resin, a polyamide-based resin, a polyacetal-based resin, a polycarbonate-based resin, a polyphenylene ether-based resin, a polybutylene terephthalate-based resin, a polyethylene terephthalate-based resin, a polyolefin-based resin, a polyphenylene sulfide-based resin, a polysulfone-based resin, a polyether sulfone-based resin, a polyarylate-based resin, a polyether ether ketone-based resin, a polyamide imide-based resin, a liquid crystal polymer, and the like can be made use of.

A cylindrical cup 34 with bottom is fixed to holding portion 14 of lower shell 10 so as to cover igniter 30. Cup 34 has a top wall portion and a sidewall portion, and contains enhancer chamber 35 accommodating an enhancer agent 36. Cup 34 is fixed to holding portion 14 such that enhancer chamber 35 provided therein faces ignition portion 31. More specifically, a flange portion 34a is provided to protrude outward, at an end portion on an opening end side of cup 34 and flange portion 34a of cup 34 is crimped by a crimping portion 15b provided in holding portion 14, so that cup 34 is fixed to holding portion 14.

Cup 34 completely hermetically seals enhancer chamber 35 provided therein while it is fixed to holding portion 14 of lower shell 10. This cup 34 bursts or melts with increase in pressure or with transfer of generated heat within enhancer chamber 35 when igniter 30 is actuated and enhancer agent 36 is ignited. It is noted that aluminum, an aluminum alloy, plastic, or the like is suitably made use of as a material for cup 34.

Enhancer agent 36 loaded in enhancer chamber 35 produces thermal particles as it is ignited by the flame caused by actuation of igniter 30 and it bums. Enhancer agent 36 should be able to reliably start burning a gas generating agent 41 which will be described later, and generally, a composition or the like composed of metal powders/oxidizing agent represented by B/KNO₃ or the like is employed. For enhancer agent 36, a powdery enhancer agent, an enhancer agent formed in a prescribed shape by a binder, or the like is made use of. A shape of the enhancer agent formed by a binder includes, for example, various shapes such as a granule, a column, a sheet, a sphere, a cylinder with a single hole, a cylinder with multiple holes, a tablet, and the like.

A combustion chamber 40 accommodating gas generating agent 41 is located in a space surrounding a portion where cup 34 described above is arranged, in the space inside the housing constituted of lower shell 10 and upper shell 20. More specifically, cup 34 described above is arranged to protrude into combustion chamber 40 formed in the inside of the housing, and a space provided in a portion facing an outer surface of a sidewall portion of this cup 34 is formed as combustion chamber 40.

In addition, in a space radially surrounding combustion chamber 40 accommodating this gas generating agent 41, a filter 50 is arranged along an inner circumference of the housing. Filter 50 has a hollow cylindrical shape, and is arranged coaxially with the housing. Filter 50 is formed from a stack structure formed by radially stacking a plate-shaped portion made of metal and it is suitably formed from a stack structure formed by winding one plate-shaped member made of metal. For example, a steel plate (mild steel) or a stainless steel plate can suitably be made use of as a plate-shaped member made of metal, and a nonferrous metal plate of aluminum, copper, titanium, nickel, or an alloy thereof, or the like can also be made use of. It is noted that a detailed structure of this filter 50 and a structure for assembly thereof to the housing will be described later.

Gas generating agent 41 is an agent which is ignited by thermal particles generated as a result of actuation of igniter 30 and produces a gas as it bums. A non-azide-based gas generating agent is preferably employed as gas generating agent 41, and gas generating agent 41 is formed as a molding generally containing a fuel, an oxidizing agent, and an additive. For the fuel, for example, a triazole derivative, a tetrazole derivative, a guanidine derivative, an azodicarbonamide derivative, a hydrazine derivative, or the like, or combination thereof is made use of. Specifically, for example, nitroguanidine, guanidine nitrate, cyanoguanidine, 5-aminotetrazole, and the like are suitably made use of. In addition, as the oxidizing agent, for example, basic nitrate such as basic copper nitrate, perchlorate such as ammonium perchlorate or potassium perchlorate, nitrate containing cations selected from an alkali metal, an alkali earth metal, a transition metal, and ammonia, or the like is made use of. As the nitrate, for example, sodium nitrate, potassium nitrate, or the like is suitably made use of. Moreover, as the additive, a binder, a slag formation agent, a combustion modifier, or the like is exemplified. As the binder, for example, metal salt of carboxymethyl cellulose, an organic binder such as stearate, or an inorganic binder such as synthetic hydrotalcite and Japanese acid clay can suitably be made use of. As the slag formation agent, silicon nitride, silica, Japanese acid clay, or the like can suitably be made use of. In addition, as the combustion modifier, a metal oxide, ferrosilicon, activated carbon, graphite, or the like can suitably be made use of.

A shape of a molding of gas generating agent 41 includes various shapes such as a particulate shape including a granule, a pellet, and a column, and a disc shape. In addition, among columnar moldings, a molding with holes having holes in the molding (such as a cylindrical shape with a single hole or a cylindrical shape with multiple holes) is also made use of. These shapes are preferably selected as appropriate depending on specifications of an air bag apparatus in which gas generator 1 A is incorporated, and for example, a shape optimal for the specifications is preferably selected by selecting a shape allowing change over time of a rate of generation of a gas during burning of gas generating agent 41. Furthermore, in addition to a shape of gas generating agent 41, a size of a molding or an amount thereof for filling is preferably selected as appropriate, in consideration of a linear burning velocity, a pressure exponent, or the like of gas generating agent 41.

Filter 50 functions as cooling means for cooling a gas by depriving heat at a high temperature of the gas when the gas produced in combustion chamber 40 passes through this filter 50 and also functions as removal means for removing by catching, slag (residues) contained in the gas. Therefore, in order to sufficiently cool the gas and to avoid emission of the slag to the outside, the gas produced in combustion chamber 40 should be caused to reliably pass through filter 50.

An outer circumferential surface of filter 50 is located at a prescribed distance from the inner circumferential surface of circumferential wall portion 12 of lower shell 10 and the inner circumferential surface of circumferential wall portion 22 of upper shell 20. A plurality of gas discharge openings 24 are provided in circumferential wall portion 22 of upper shell 20 in a portion facing filter 50. This gas discharge opening 24 serves to guide an actuation gas which has passed through filter 50 to the outside of the housing. To a main surface of circumferential wall portion 22 of upper shell 20, which is located on a side of filter 50, a sealing member 25 is attached to close gas discharge opening 24. An aluminum foil or the like having an adhesive member applied to its one surface is made use of as this sealing member 25. Thus, hermeticity of combustion chamber 40 is ensured.

At an end portion of upper shell 20 of combustion chamber 40, on the side of top plate portion 21, a cushion material 42 is arranged to be in contact with gas generating agent 41 accommodated in combustion chamber 40. This cushion material 42 is provided for the purpose of preventing gas generating agent 41 made of a molding from being crushed by vibration or the like, and a molding of ceramics fibers or a foamed resin (such as foamed silicone) is suitably made use of.

An operation of gas generator 1A in the present embodiment will now be described with reference to Fig. 1.

When a vehicle on which gas generator 1A in the present embodiment is mounted collides, collision sensing means separately provided in the vehicle senses collision, and based thereon, igniter 30 is actuated in response to power feed through a control unit separately provided in the vehicle. Enhancer agent 36 accommodated in enhancer chamber 35 burns as it is ignited by flame produced as a result of actuation of igniter 30 and produces a large number of thermal particles. As this enhancer agent 36 bums, cup 34 bursts or melts and thermal particles described above flow into combustion chamber 40.

Thermal particles which have flowed in ignite and bum gas generating agent 41 accommodated in combustion chamber 40 and a large amount of gas is produced. The gas produced in combustion chamber 40 passes through filter 50. At that time, heat is deprived of the gas through filter 50 and the gas is cooled, slag contained in the gas is removed by filter 50, and the gas flows into an outer peripheral portion of the housing.

As an internal pressure in the housing increases, sealing by sealing member 25 which has closed gas discharge opening 24 of upper shell 20 is broken, and the gas is discharged to the outside of the housing through gas discharge opening 24. The discharged gas is introduced in the air bag provided adjacent to gas generator 1A and it expands and develops the air bag.

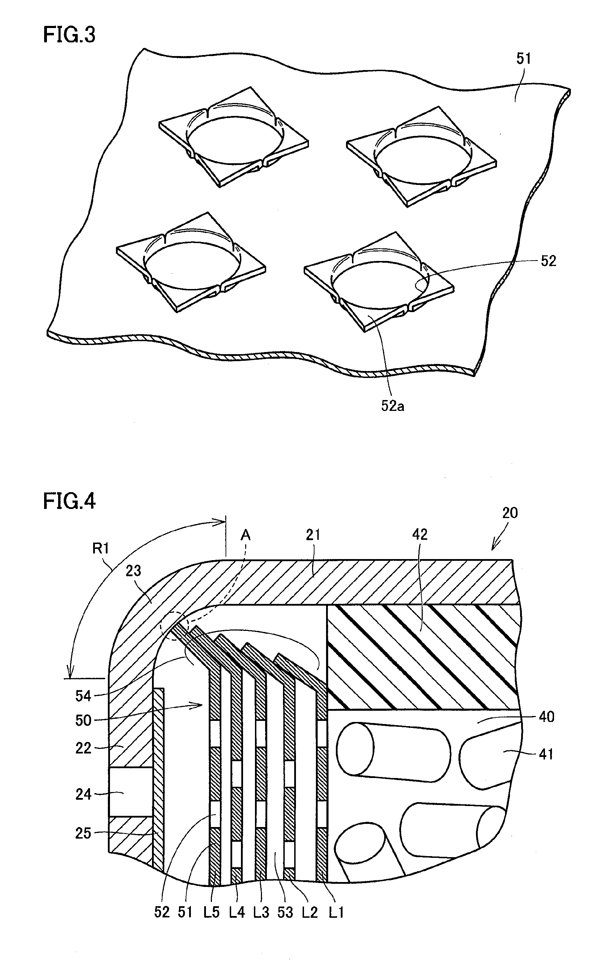

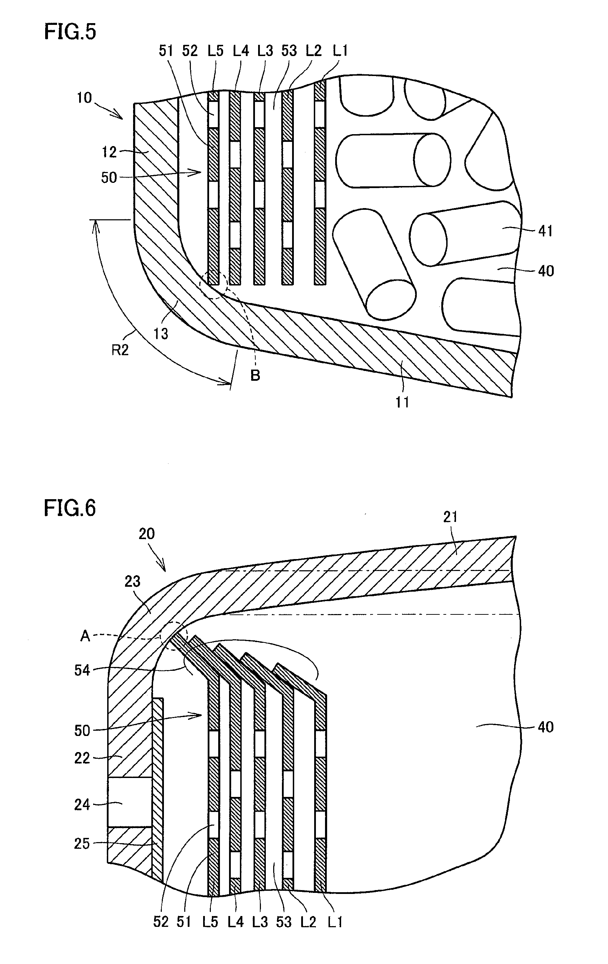

Fig. 2 is a schematic perspective view of the filter shown in Fig. 1, and Fig. 3 is an enlarged perspective view of a surface portion of the plate-shaped portion of the filter shown in Fig. 1. In addition, Fig. 4 is an enlarged view of an area in the vicinity of the upper curved corner portion of the gas generator shown in Fig. 1, and Fig. 5 is an enlarged view of an area in the vicinity of the lower curved corner portion of the gas generator shown in Fig. 1. A detailed structure of filter 50 provided in gas generator 1A in the present embodiment and a structure for assembly to the housing will now be described with reference to these Figs. 2 to 5 in addition to Fig. 1 described above.

As shown in Figs. 1 and 2, filter 50 has a cylindrical portion 51 extending along the axial direction. Cylindrical portion 51 is formed as the plate-shaped portion made of metal is stacked in the radial direction and has a plurality of layers L1 to L5. The plurality of layers L1 to L5 forming cylindrical portion 51 are provided with a plurality of openings 52, and combustion chamber 40 and a space outside filter 50 communicate with each other through the plurality of openings 52.

As shown in Fig. 3, filter 50 is formed by winding a plate-shaped metal member having a plurality of openings 52, which is called hook metal. The plurality of openings 52 are formed by press-working (burring) and provided in each layer of L1 to L5 of filter 50 after winding.

Here, a protrusion 52a is formed around the periphery of opening 52 provided in cylindrical portion 51. This protrusion 52a is formed at the time of press-working (burring) for forming openings 52 in the plate-shaped metal member described above and formed by cutting to erect by a press of a presser. In order to form protrusion 52a in a shape as illustrated, a pin in a pyramid or cone shape is suitably employed as a press.

Presence of protrusion 52a above leads to formation in filter 50, of layered gap portions 53 as shown in Fig. 1. Gap portions 53 and openings 52 form in filter 50, a labyrinthine flow path allowing a space inside filter 50 and an outer space to communicate with each other. It is noted that a position of protrusion 52a provided in filter 50 may be on an inner circumferential surface side or an outer circumferential surface side of each layer of L1 to L5 of filter 50.

In addition, in filter 50, a roller may be used after press-working (burring) as necessary so as to roll protrusions 52a which have been cut to erect, so that protrusions 52a are in a shape conforming to the surface of the plate-shaped metal member as illustrated. In such a case, since heights of protrusions 52a can be set to the same desired height, sizes of gap portions 53 formed between layers L1 to L5 can be adjusted to a desired size. It is noted that, by varying pressing force at the time of rolling for each layer, a size of each gap portion 53 can also be varied for each layer.

As shown in Figs. 1, 2, and 4, each of the plurality of layers L1 to L5 forming cylindrical portion 51 has a folded portion 54 at the axial end portion on the side where upper shell 20 is located. Folded portion 54 is formed by folding outward the axial end portion of cylindrical portion 51.

As shown in Fig. 1, filter 50 is assembled to the housing by being sandwiched in the axial direction between lower shell 10 and upper shell 20. Here, an axial end portion on the side where upper shell 20 is located of the pair of axial end portions of filter 50 abuts to an inner peripheral surface of upper curved corner portion 23 of upper shell 20, and an axial end portion on the side where lower shell 10 is located of the pair of axial end portions of filter 50 abuts to an inner peripheral surface of lower curved corner portion 13 of lower shell 10.

More specifically, as shown in Fig. 4, folded portion 54 is provided in each layer of L1 to L5 as described above at the axial end portion of filter 50 on the side where upper shell 20 is located, and a tip end of the folded portion (a portion shown with a character A in the figure) provided in the plate-shaped portion located in the outermost layer (that is, layer L5) of folded portions 54 provided in the plurality of layers L1 to L5 pressure-contacts upper curved corner portion 23 of upper shell 20 by coming in contact therewith along the circumferential direction. Here, upper curved corner portion 23 has a shape smoothly curved within a range of a shown region R1 and the tip end above should only be in contact with upper shell 20 within the range of region R1.

On the other hand, as shown in Fig. 5, a tip end (a portion shown with a character B in the figure) of the plate-shaped portion located in the outermost layer (that is, layer L5) of the axial end portion of filter 50 on the side where lower shell 10 is located pressure-contacts lower curved corner portion 13 of lower shell 10 by coming in contact therewith along the circumferential direction. Here, lower curved corner portion 13 has a shape smoothly curved within a range of a shown region R2 and the tip end above should only be in contact with lower shell 10 within the range of region R2.

From the foregoing, folded portion 54 provided in the plate-shaped portion located in outermost layer L5 described above deforms as it abuts to upper shell 20 during assembly, so that filter 50 pressure-contacts upper shell 20 and lower shell 10 at a moderate pressure and is fixed to the housing in the stable manner.

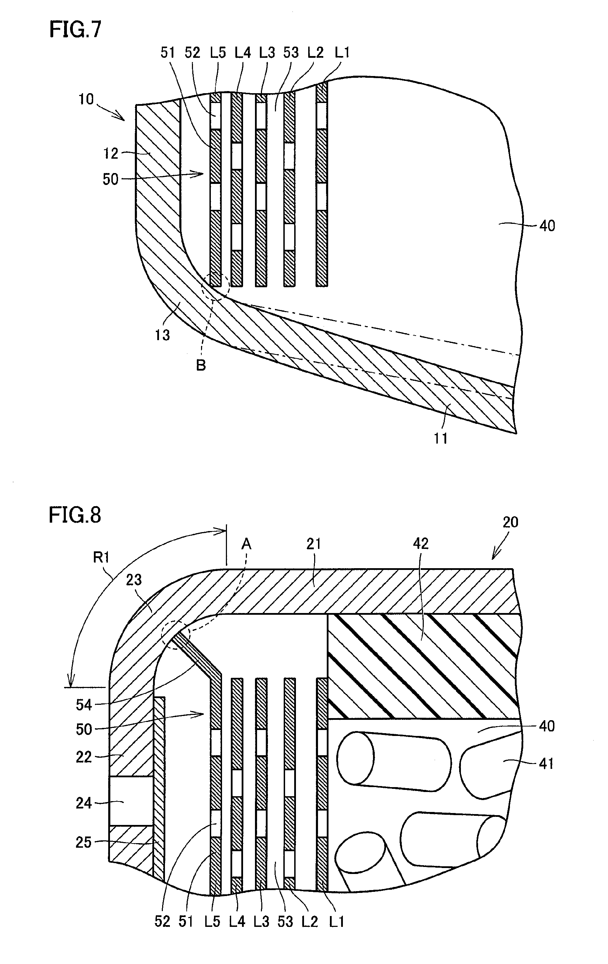

Fig. 6 is an enlarged view of an area in the vicinity of the upper curved corner portion during actuation of the gas generator shown in Fig. 1, and Fig. 7 is an enlarged view of an area in the vicinity of the lower curved corner portion during actuation of the gas generator shown in Fig. 1. Change in shape in the vicinity of upper curved corner portion 23 and in the vicinity of lower curved corner portion 13 during actuation of gas generator 1A in the present embodiment will now be described with reference to these Figs. 6 and 7. It is noted that positions of upper shell 20 and lower shell 10 before actuation of gas generator 1A are shown with chain lines in Figs. 6 and 7.

As shown in Figs. 6 and 7, during actuation of gas generator 1A, with increase in internal pressure in combustion chamber 40 due to combustion of gas generating agent 41, upper shell 20 and lower shell 10 each deform outward. More specifically, in upper shell 20, top plate portion 21 deforms as it bulges upward, and in lower shell 10, bottom plate portion 11 deforms as it bulges downward.

Here, no or little deformation with increase in internal pressure in combustion chamber 40 occurs in upper curved corner portion 23 continuing to circumferential wall portion 22 and top plate portion 21 of upper shell 20, so that a state of abutment between the axial end portion of filter 50 on the side where upper shell 20 is located and upper curved corner portion 23 is maintained. In addition, no or little deformation with increase in internal pressure in combustion chamber 40 occurs either in lower curved corner portion 13 continuing to circumferential wall portion 12 and bottom plate portion 11 of lower shell 10 so that a state of abutment between the axial end portion of filter 50 on the side where lower shell 10 is located and lower curved corner portion 13 is maintained.

Therefore, no gap is created between filter 50 and upper shell 20 and between filter 50 and lower shell 10, a gas can effectively be prevented from flowing out from therebetween, and the gas can reliably discharge to the outside through filter 50. Even if upper curved corner portion 23 and lower curved corner portion 13 deform, an amount of deformation thereof is much smaller than deformation caused in top plate portion 21 or bottom plate portion 11 because the shape of these corner portions are in a curved shape. In that case as well, by providing folded portion 54 described above, deformation of upper curved corner portion 23 and lower curved corner portion 13 is followed owing to elastic force provided to filter 50 and a state of abutment of filter 50 to upper curved corner portion 23 and lower curved corner portion 13 is maintained so that a gas can effectively be prevented from flowing out.

According to gas generator 1A in the present embodiment described above, a pair of axial end portions of filter 50 can always be maintained in a state pressure-contacted with upper shell 20 and lower shell 10 during actuation of gas generator 1A. Therefore, the gas can be prevented from discharging from gas discharge opening 24 without passing through filter 50. Namely, filter 50 itself functions as an effluence prevention member for preventing a gas from flowing out, and it is no longer necessary to separately provide an effluence prevention member formed from another part which has conventionally been necessary in the housing. Therefore, a gas generator with a simplified construction capable of reliably preventing a gas from flowing out through a gap between filter 50 and the housing can be obtained. In addition, since it is no longer necessary to separately provide an effluence prevention member, a gas generator can also be lighter in weight.

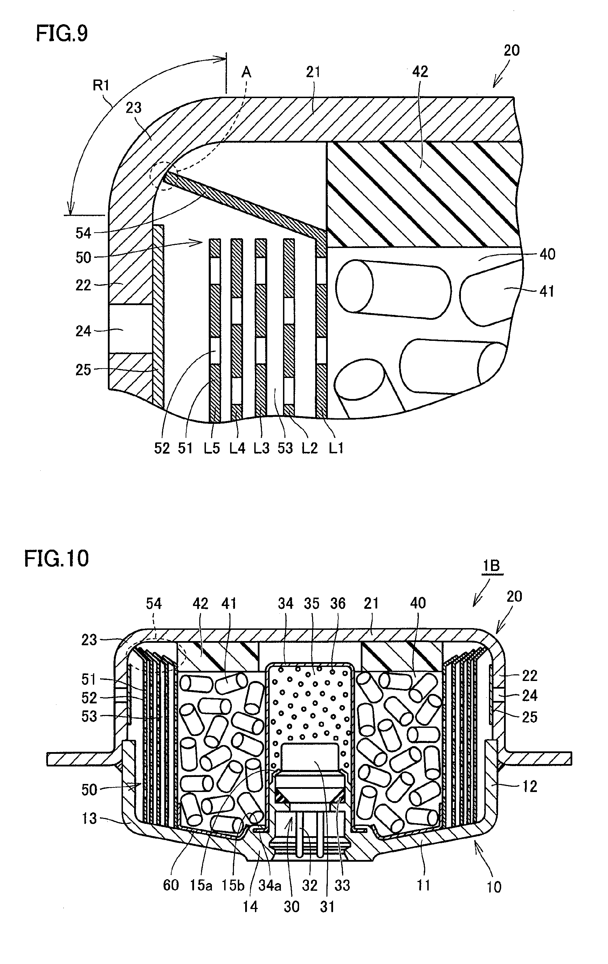

Figs. 8 and 9 are enlarged views of an area in the vicinity of the upper curved corner portion of the gas generators according to first and second variations based on the present embodiment. The gas generators according to the first and second variations based on the present embodiment will now be described with reference to these Figs. 8 and 9.

As shown in Fig. 8, in the gas generator according to the first variation, folded portion 54 is provided only at the axial end portion of the plate-shaped portion located in outermost layer L5 of filter 50. On the other hand, as shown in Fig. 9, in the gas generator according to the second variation, folded portion 54 is provided only at the axial end portion of the plate-shaped portion located in innermost layer L1 of filter 50. Namely, in the gas generators according to these first and second variations, folded portion 54 is provided to extend only around a prescribed layer of cylindrical portion 51 forming filter 50 and no folded portion is provided in other layers.

In a case of such a construction as well, a pair of axial end portions of filter 50 can always be maintained in a state pressure-contacted with upper shell 20 and lower shell 10 during actuation, and thus an effect the same as the effect obtained in the case of gas generator 1A in the first embodiment of the present invention described above can be obtained. It is noted that a layer where a folded portion abutting to upper curved corner portion 23 of upper shell 20 is formed is not limited to the outermost layer or the innermost layer as described above but it may be an intermediate layer located therebetween.

### (Second Embodiment)

Fig. 10 is a schematic diagram of a gas generator in a second embodiment of the present invention. A gas generator 1 B in the present embodiment will be described below with reference to this Fig. 10.

As shown in Fig. 10, gas generator 1 B in the present embodiment is different from gas generator 1 A in the first embodiment of the present invention described above in a structure in the vicinity of lower curved corner portion 13 of lower shell 10. Namely, gas generator 1A in the first embodiment of the present invention described above is constructed such that the axial end portion of filter 50 located on the side of lower shell 10 abuts to lower curved corner portion 13 of lower shell 10, however, in gas generator 1 B in the present embodiment, the axial end portion abuts to bottom plate portion 11 of lower shell 10.

In addition, in gas generator 1 B in the present embodiment, an effluence prevention member 60 for supporting filter 50 and preventing a gas from flowing out through a gap between filter 50 and lower shell 10 is arranged at the end portion of combustion chamber 40 on the side of bottom plate portion 11 of lower shell 10. Effluence prevention member 60 is formed by press-working or the like a plate-shaped member made of metal such as stainless steel or iron steel, and it is formed from an annular member having a site abutting to the inner circumferential surface of the lower end portion of filter 50 and a site abutting to bottom plate portion 11 of lower shell 10. Here, effluence prevention member 60 has moderate elasticity and moderately pressure-contacts each of the inner circumferential surface of filter 50 and bottom plate portion 11 of lower shell 10.

In the case of such a construction as well, the axial end portion of filter 50 on the side located in upper shell 20 can always be maintained in a state pressure-contacted with upper shell 20 during actuation of gas generator 1B, and hence a gas can be prevented from discharging from gas discharge opening 24 without passing through filter 50. Namely, filter 50 itself functions as an effluence prevention member for preventing a gas from flowing out at its upper end portion, and it is no longer necessary to separately provide on the upper side of the housing, an effluence prevention member formed from another part which has conventionally been necessary. Therefore, in a case where filter 50 is formed from a stack structure of hook metal as well, a gas generator with a simplified construction capable of reliably preventing a gas from flowing out through a gap between filter 50 and the housing can be obtained. In addition, since it is no longer necessary to separately provide an effluence prevention member on the upper side of the housing, a gas generator can also be lighter in weight.

Thus, in a case where one of the axial end portions of the filter is constructed to pressure-contact a flat plate portion of the housing as well, with such a construction that an effluence prevention member formed from another member is arranged in a portion with which one of the axial end portions is in contact and the other of the axial end portions pressure-contacts a curved corner portion of the housing, a gas generator with a construction more simplified than a conventional example, which is capable of reliably preventing a gas from flowing out from between the filter and the housing, can be obtained.

### (Third Embodiment)

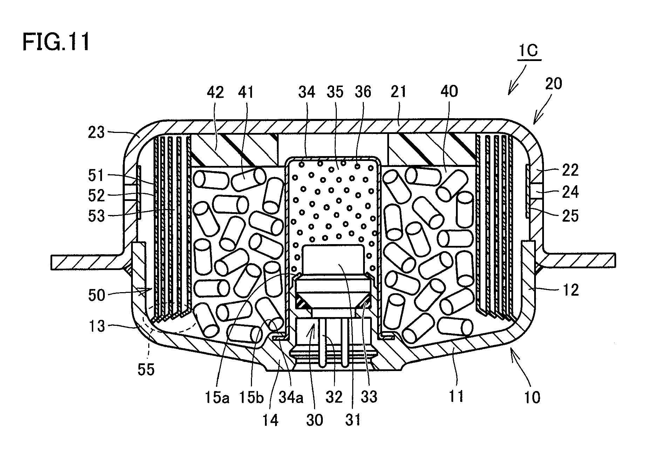

Fig. 11 is a schematic diagram of a gas generator in a third embodiment of the present invention. A gas generator 1C in the present embodiment will be described below with reference to this Fig. 11.

As shown in Fig. 11, gas generator 1C in the present embodiment is different from gas generator 1 A in the first embodiment of the present invention described above in a structure in the vicinity of lower curved corner portion 13 of lower shell 10 and a structure in the vicinity of upper curved corner portion 23 of upper shell 20. Namely, in gas generator 1A in the first embodiment of the present invention described above, folded portion 54 is provided at the axial end portion of filter 50 located on the side of upper shell 20, however, in gas generator 1C in the present embodiment, a folded portion 55 is provided at the axial end portion of filter 50 located on the side of lower shell 10.

More specifically, folded portion 55 is provided in each layer, at the axial end portion of filter 50 on the side where lower shell 10 is located, and among folded portions 55 provided in the plurality of layers, the tip end of the folded portion provided in the plate-shaped portion located in the outermost layer pressure-contacts lower curved corner portion 13 of lower shell 10 by coming in contact therewith along the circumferential direction. On the other hand, the tip end of the plate-shaped portion located in the outermost layer of the axial end portion of filter 50 on the side where upper shell 20 is located pressure-contacts upper curved corner portion 23 of upper shell 20 by coming in contact therewith along the circumferential direction.

In the case of such a construction as well, during actuation of gas generator 1C, a pair of axial end portions of filter 50 can always be maintained in a state pressure-contacted with lower shell 10 and upper shell 20, and therefore a gas can be prevented from discharging from gas discharge opening 24 without passing through filter 50. Namely, filter 50 itself functions as an effluence prevention member for preventing a gas from flowing out, and it is no longer necessary to separately provide in the housing, an effluence prevention member formed from another part which has conventionally been necessary. Therefore, in a case where filter 50 is formed from a stack structure of hook metal as well, a gas generator with a simplified construction capable of reliably preventing a gas from flowing out through a gap between filter 50 and the housing can be obtained. In addition, since it is no longer necessary to separately provide an effluence prevention member, a gas generator can also be lighter in weight.

In the first to third embodiments and the variations thereof of the present invention described above, a case where only any of an outermost layer and an innermost layer of a filter formed by winding a plate-shaped metal member is constructed to abut to a curved corner portion of a housing has been exemplified for description, however, the outermost layer and a plurality of layers inside thereof may be constructed to abut to a curved corner portion or the innermost layer and a plurality of layers outside thereof may be constructed to abut to a curved corner portion. In addition, all layers from the innermost layer to the outermost layer may be constructed to abut to a curved corner portion, and only some or all of intermediate layers located between the innermost layer and the outermost layer may be constructed to abut to a curved corner portion (that is, neither of the innermost layer and the outermost layer abuts to a curved corner portion).

Moreover, in the first to third embodiments and the variations thereof of the present invention described above, a case where the number of layers of the filter formed by winding a plate-shaped metal member is set to 5 has been exemplified for description, however, the number of layers is not limited to 5 and any number of layers may be set. Namely, a single layer or a plurality of layers other than 5 layers may be acceptable.

Furthermore, a plate-shaped metal member can be formed from a single layer (that is, formed from a cylindrical member), a non-layered metal member can be assembled to the inside and/or the outside of the plate-shaped metal member of a single layer, and the filter can be formed from the plate-shaped metal member of a single layer and the non-layered metal member. Here, as the non-layered metal member, for example, a metal member obtained by winding and sintering a metal wire rod of stainless steel or iron steel, a metal member formed by press-working a mesh material into which metal wire rods are knitted to thereby pack the same, or the like is exemplified, and as the mesh material, a wire gauze of stocking stitch, a plain-woven wire gauze, an aggregate of crimped metal wire rods, or the like can be made use of.

In addition, in the first to third embodiments and the variations thereof of the present invention described above, a case where a filter fabricated by winding what is called hook metal is made use of as the filter has been exemplified, however, alternatively, a filter fabricated by winding perforated metal can also be made use of and a filter fabricated by winding expanded metal can also be made use of. Here, perforated metal refers to a metal plate provided only with openings in a plate-shaped metal member (that is, no protrusion is provided around a periphery of an opening), and expanded metal refers to a metal plate obtained, for example, by making staggered cuts in a plate-shaped metal member and widening the cuts to thereby forming openings in the plate-shaped metal member in a mesh. In a case where such perforated metal or expanded metal is employed instead of hook metal described above as well, an effect the same as the effect described in the first to third embodiments and the variations thereof of the present invention described above can be obtained.

Moreover, in the first to third embodiments and the variations thereof of the present invention described above, a case where a folded portion is provided at one of axial end portions of the filter has been exemplified for description, however, a folded portion may naturally be provided at each of the axial end portions of a filter material. Furthermore, instead of the folded portion, a bent portion may be formed by curving an axial end portion of the filter and the bent portion may be constructed to abut to the curved corner portion on the upper side and/or the lower side. Additionally, it is not essential to provide the folded portion, the bent portion, or the like at the axial end portion of the filter, and a filter not including the same could achieve a corresponding effect provided that at least one of axial end portions thereof abuts to a curved corner portion of the housing.

In addition, in the first to third embodiments and the variations thereof of the present invention described above, a case where a filter formed from a stack structure is formed by winding one plate-shaped member made of metal has been exemplified for description, however, the construction of the filter is not limited as such. Namely, a filter formed from a stack structure may be formed by forming layers from separate plate-shaped members made of metal and combining these, or a filter made of a stack structure may be formed by forming some of a plurality of layers by winding one plate-shaped member made of metal, forming remaining layers by winding another plate-shaped member made of metal, and combining these.

Moreover, characteristic features of the gas generators according to the first to third embodiments and variations thereof of the present invention described above can naturally be combined with one another within the scope allowable in light of the gist of the present invention.

Thus, each embodiment and a variation thereof above disclosed herein are illustrative and non-restrictive in every respect. The technical scope of the present invention is delimited by the terms of the claims and is intended to include any modifications within the scope and meaning equivalent to the terms of the claims.

### REFERENCE SIGNS LIST

1A to 1C gas generator; 10 lower shell; 11 bottom plate portion; 12 circumferential wall portion; 13 lower curved corner portion; 14 holding portion; 15a, 15b crimping portion; 20 upper shell; 21 top plate portion; 22 circumferential wall portion; 23 upper curved corner portion; 24 gas discharge opening; 25 sealing member; 30 igniter; 31 ignition portion; 32 terminal pin; 33 sealing member; 34 cup; 34a flange portion; 35 enhancer chamber; 36 enhancer agent; 40 combustion chamber; 41 gas generating agent; 42 cushion material; 50 filter; 51 cylindrical portion; 52 opening; 52a protrusion; 53 gap portion; 54, 55 folded portion; and 60 effluence prevention member.

## Claims

1. A gas generator, comprising:
a housing having a circumferential wall portion in a short, substantially cylindrical shape provided with a gas discharge opening and a pair of end wall portions substantially in a disc shape closing axial end portions of said circumferential wall portion and containing a combustion chamber (40) accommodating a gas generating agent (41);
an igniter (30) attached to one of said pair of end wall portions so as to face said combustion chamber (40); and
a filter (50) in a hollow, substantially cylindrical shape disposed in said housing,
said filter (50) including a plate-shaped portion made of metal, which extends along a circumferential direction so as to surround said combustion chamber (40) in a radial direction of said housing and is provided with a plurality of openings (52), and being fixed to said housing by being sandwiched by said housing in an axial direction, and
said housing further having a curved corner portion which continues to each of adjacent said circumferential wall portion and said end wall portion and is formed by abutment of axial end portions of said plate-shaped portion of said filter (50) along a circumferential direction, in at least one of portions between said circumferential wall portion and said pair of end wall portions.

2. The gas generator according to claim 1, wherein
said curved corner portion to which the axial end portion of said plate-shaped portion of said filter (50) abuts is at least located between an end wall portion which is different from the end wall portion to which said igniter (30) is attached and said circumferential wall portion.

3. The gas generator according to claim 1, wherein
said axial end portion of said plate-shaped portion of said filter (50), which abuts to said curved corner portion, is formed from a folded portion formed by folding said plate-shaped portion or a bent portion formed by bending said plate-shaped portion.

4. The gas generator according to claim 1, wherein
said plate-shaped portion has a protrusion (52a) around a periphery of said opening, and
said filter (50) is formed from a stack structure which is formed such that said plate-shaped portion having the protrusion (52a) is stacked in a radial direction to thereby form layered gap portions (53) therein.

5. The gas generator according to claim 4, wherein
said axial end portion of said plate-shaped portion of said filter (50), which abuts to said curved corner portion, is formed from an axial end portion of the plate-shaped portion located at least in an outermost layer of stacked said plate-shaped portions.

6. The gas generator according to claim 4, wherein
said axial end portion of said plate-shaped portion of said filter (50), which abuts to said curved corner portion, is formed from an axial end portion of the plate-shaped portion located at least in an innermost layer of stacked said plate-shaped portions.

7. The gas generator according to claim 4, wherein
said filter (50) is formed from a stack structure formed by winding one plate-shaped member made of metal.
